# EUROPÄISCHE PATENTSCHRIFT

(11) **EP 2 707 629 B1**
(45) Veröffentlichungstag und Bekanntmachung des Hinweises auf die Patenterteilung: **26.08.2015**
(21) Anmeldenummer: 12720864.3
(22) Anmeldetag: 11.05.2012
(51) Int. Cl.: F16J 15/447, F04C 15/00, F04C 2/12

(54) **VORRICHTUNG ZUM ABDICHTEN EINES PUMPRAUMS EINER DREHKOLBENPUMPE, SOWIE DREHKOLBENPUMPE MIT SELBIGER**
APPARATUS FOR SEALING OFF A PUMP SPACE OF A ROTARY PISTON PUMP, AND ROTARY PISTON PUMP HAVING SAME
DISPOSITIF D'ÉTANCHÉIFICATION D'UNE CHAMBRE DE POMPAGE D'UNE POMPE À PISTON TOURNANT, ET POMPE À PISTON TOURNANT DOTÉE DE CE DISPOSITIF

(30) Priorität: 12.05.2011 DE 202011100622 U
(43) Veröffentlichungstag der Anmeldung: 19.03.2014
(73) Patentinhaber: Hugo Vogelsang Maschinenbau GmbH, 49632 Essen (DE)
(72) Erfinder: KRAMPE, Paul, 49632 Essen (DE); HINNERS, Thomas, 49632 Essen (DE)
(74) Vertreter: Eisenführ Speiser
(86) Internationale Anmeldenummer: PCT/EP2012/058783
(87) Internationale Veröffentlichungsnummer: WO 2012/152924

(56) Entgegenhaltungen:
- US-A1- 2002 044 876
- US-A1- 2002 081 226
- US-A1- 2009 285 711

## Beschreibung

Die vorliegende Erfindung betrifft eine Vorrichtung zum Abdichten, insbesondere im Bereich einer Wellendurchführung, eines Pumpraums einer Drehkolbenpumpe gegenüber einem fluidfreien Bereich der Drehkolbenpumpe, wobei die Vorrichtung zwei oder mehr Dichtungsglieder aufweist, die derart benachbart an einer Stirnseite eines auf der Welle angeordneten Drehkolbens in dem Pumpraum der Drehkolbenpumpe anordenbar sind, dass sich zwischen den Dichtungsgliedern ein Labyrinthspalt erstreckt, welcher zur Dichtwegverlängerung relativ zu der Welle in radialer Richtung und in axialer Richtung eingerichtet ist, wobei der Dichtweg der Pfad durch den Labyrinthspalt ist, und der Dichtweg in radialer Richtung relativ zu der Welle grösser ist als der Dichtweg in axialer Richtung relativ zu der Welle.

Die Erfindung betrifft weiterhin eine Drehkolbenpumpe zur Förderung von Fluiden, insbesondere von mit Festkörpern beladenen Flüssigkeiten, mit einem Gehäuse mit einem Pumpraum und mindestens einem Paar ineinander verzahnter, innerhalb des Pumpraums angeordneter Drehkolben, welche jeweils auf einer Welle gelagert sind, wobei sich die Welle aus dem Pumpraum heraus in einen fluidfreien Bereich der Drehkolbenpumpe erstreckt.

Unter axial wird im Rahmen dieser Beschreibung die Ausrichtung in Richtung der Rotationsachse des bzw. der Drehkolben verstanden, welches auch die Wellenachse ist.

Zum Schutz der Funktionsfähigkeit bekannter Drehkolbenpumpen ist es notwendig, fluidfreie Bereiche der Drehkolbenpumpe, beispielsweise Getriebe- und/oder Lagerbereiche, von dem fluidführenden Pumpraum mittels Dichtmitteln zu isolieren. Andernfalls führt das Eindringen von mit Festkörpern beladener Flüssigkeit in das Getriebe bereits nach kurzer Zeit zu starken Verschleißerscheinungen bis hin zum Versagen des Getriebes. Zudem müssen die Welle und die Wellenlager gegen Verschmutzungen durch die geförderte Flüssigkeit geschützt werden. Der Bereich der Wellendurchführung von dem fluidführenden Pumpraum zu dem fluidfreien Bereich der Pumpe erfordert besondere Aufmerksamkeit.

Bekannte Vorrichtungen zur Abdichtung und bekannte Drehkolbenpumpen sehen in diesem Zusammenhang den Einsatz von Dichtlabyrinthen vor, welche als berührungslose Dichtelemente mittels einer Verlängerung des Dichtweges den Fluidtransport von einer Seite der Dichtung zu der anderen Seite erschweren und auf dieser Grundlage eine gewisse Dichtwirkung erzielen. Allerdings arbeiten die bekannten Dichtvorrichtungen in den Drehkolbenpumpen nicht vollständig zufriedenstellend. Im Bereich der Fußkreisdurchmesser der Drehkolben bei bekannten Drehkolbenpumpen tritt an den Stirnseiten der Drehkolben ein Kurzschlussstrom von Fluid (Leckstrom) von der Druckseite zur Saugseite der Drehkolbenpumpe auf. Dies erzeugt in Verbindung mit den geförderten Faserstoffen kolbenseitig unerwünschten Verschleiß.

US 2002/0081226 A1 kann als nächstliegender Stand der Technik angesehen werden und beschreibt eine Schraubenfördereinrichtung, bei der eine axiale Dichtung an einem Rotor befestigt ist und gegen eine Oberfläche abdichtet. Die axiale Dichtung beinhaltet ein Labyrinth.

US 2002/0044876 A1 beschreibt einen Schraubenverdichter, bei dem eine Radialdichtung zwischen einem mit dem Rotor drehenden Hülsenelement und einem Gehäuse vorgesehen ist. Als eine Möglichkeit zur Ausführung dieser Radialdichtung ist eine Labyrinthdichtung beschrieben.

Aus US 2009/0285711 ist eine Pumpe nach dem Roots-Prinzip bekannt, bei der mehrere Dichtungen zur Abdichtung zwischen sich drehenden und feststehenden Teilen eingesetzt werden. Einige dieser Dichtungen weisen eine spiralförmige Nut auf ihrer äußeren umfänglichen Oberfläche auf, um eine Pumpwirkung auf das Schmieröl zu bewirken.

Der Erfindung lag mithin die Aufgabe zugrunde, eine Vorrichtung zum Abdichten, insbesondere im Bereich der Wellendurchführung, einer Drehkolbenpumpe anzugeben, die die vorstehend genannten Nachteile möglichst weitgehend abmildert sowie nach Möglichkeit zu einer verbesserten Pumpleistung beitragen.

Die Erfindung löst die ihr zugrundeliegende Aufgabe bei einer Vorrichtung der eingangs genannten Art, indem der Dichtweg in radialer Richtung relativ zu der Welle größer ist als der Dichtweg in axialer Richtung relativ zu der Welle. Die Erfindung macht sich hierbei die Erkenntnis zunutze, dass die Dichtwirkung dadurch im besonderen Maße gesteigert wird, dass festkörperbeladenes Fluid umso schlechter durch den Labyrinthspalt hindurchströmen kann, desto größer die Komponente des Dichtwegs in radialer Richtung im Verhältnis zu der Richtungskomponente des Dichtwegs in axialer Richtung ausgeprägt ist. Dies wird dadurch erzielt, dass aufgrund der Rotation einzelner oder sämtlicher Dichtungsglieder mit der Welle im Labyrinthspalt befindliches Fluid ebenfalls von der Rotation erfasst wird. Dadurch wirkt auf das Fluid eine Zentrifugalbeschleunigung, die eine Erhöhung des Strömungswiderstandes des Fluids in Bezug auf dessen radiale Bewegungskomponente bewirkt. Dieser Effekt wird umso stärker ausgeprägt, je größer das Verhältnis von in radialer Richtung durch den Labyrinthspalt bewegten Fluids im Verhältnis zu in axialer Richtung bewegten Fluids gewählt wird.

Es hat sich überraschend herausgestellt, dass die Ausbildung eines Dichtweges, der in radialer Richtung relativ zu der Welle größer ist als der Dichtweg in axialer Richtung relativ zu der Welle dazu beiträgt, dass die Vorrichtung zum Abdichten insgesamt sehr viel kompakter - bezogen auf die Wellenlänge - als bei Ausbildung des Dichtwegs in axialer Richtung ausgebildet wird. Hierzu ist es besonders vorteilhaft, wenn das Verhältnis von Dichtweg in radialer Richtung zu Dichtweg in axialer Richtung in einem Bereich von größer 1 bis 15 liegt. Besonders bevorzugt liegt dieses Verhältnis in einem Bereich von 5 bis 10,

Gemäß der Erfindung ist das erste Dichtungsglied als Ringscheibe ausgebildet und weist einen äußeren Durchmesser auf, welcher sich über den Fußkreis des Drehkolbens hinaus erstreckt. Der äußere Durchmesser des ersten, als Ringscheibe ausgebildeten Dichtungsglieds begrenzt den Beginn des Labyrinthspalts kolbenseitig. Der Labyrinthspalt nimmt seinen Beginn somit im Bereich des Fußkreisdurchmessers des Drehkolbens oder noch weiter außen.

Die Ausrichtung des Labyrinthspalts ist in einer bevorzugten Ausführungsform dergestalt gewählt, dass der Labyrinthspalt einen oder mehrere sich relativ zu der Welle axial erstreckende Spaltabschnitte und einen oder mehrere sich relativ zu der Welle radial erstreckende Spaltabschnitte aufweist. Hierdurch kann ein treppenförmiges oder mäanderndes Spaltbild erreicht werden, wobei auch die Knicke zusätzlich zu einer Erhöhung des Strömungswiderstands beitragen. In alternativen Ausführungsformen verläuft der Labyrinthspalt nicht strikt in axialer oder radialer Richtung, sondern abschnittsweise oder vollständig in einem Winkel zwischen 0° und 90° relativ zu der Wellenachse (in montiertem Zustand der Vorrichtung). Der Labyrinthspalt stellt sich in einer solchen Ausführung zumindest abschnittsweise als konische Ausnehmung zwischen den Dichtungsgliedern dar.

Besonders bevorzugt wird allerdings der Labyrinthspalt mit sich abwechselnd radial und axial erstreckenden Spaltabschnitten ausgebildet, da sich hierdurch fertigungsökonomische Erwärmungen vorteilhaft mit platzsparender Bauweise vereinen lassen.

Gemäß einer weiteren bevorzugten Ausführung der erfindungsgemäßen Vorrichtung ist mindestens ein erstes Dichtungsglied mittels formschlüssiger oder kraftschlüssiger Verbindungsmittel an einer Stirnseite des Drehkolbens befestigbar, und mindestens ein zweites Dichtungslied ist mittels formschlüssiger oder kraftschlüssiger Verbindungsmittel an dem Gehäuse der Drehkolbenpumpe befestigbar. Hierdurch ist das erste Dichtungsglied als mitdrehendes Bauteil ausgebildet, während das zweite Dichtungsglied als ortsfestes Bauteil ausgebildet ist. Der sich zwischen dem ersten und zweiten Dichtungsglied erstreckende Labyrinthspalt oder Teil des Labyrinthspalts wird auf diese Weise einerseits durch ein rotierendes Bauteil und andererseits durch ein feststehendes Bauteil begrenzt, wodurch im Spalt befindliches Fluid geschert wird, was zu einer weiteren Erhöhung des Strömungswiderstands und der Dichtwirkung führt. Zudem ermöglichen die Verbindungsmittel das Entfernen und Austauschen einzelner Dichtungsglieder. Im Verschleißfall sind die Dichtungsglieder zu Wartungs- und Reparaturzwecken wechselbar. Zudem ist eine Vorrichtung gemäß dieser Ausführungsform mit befestigbaren Dichtungsgliedern und in Kombination mit der erfindungsgemäßen kompakten Bauweise bezogen auf den axialen Einbauraum bei herkömmlichen Drehkolbenpumpen nachrüstbar, ohne dass besondere Modifikationen am Gehäuse und/oder Pumpraum der Drehkolbenpumpen vorgenommen werden müssten.

Ein weiterer Vorteil in Verbindung mit dem sich zwischen den Dichtungsgliedern erstreckenden Labyrinthspalt wird darin gesehen, dass Verschleiß nur bei den austauschbaren Dichtungsgliedern und nicht wie bei herkömmlichen Drehkolbenpumpen an der Kolbenfläche bzw. Stirnfläche auftritt.

Gemäß einer weiteren bevorzugten Ausführungsform weist das erste Dichtungsglied an einer Stirnseite einen Vorsprung in axialer Richtung relativ zu der Welle auf, welcher zur Abstützung gegen eine Wellendichtung eingerichtet ist. Alternativ dazu weist die Vorrichtung anstelle des Vorsprungs ein drittes Dichtungsglied auf, welches als Distanzring ausgebildet ist und zur Abstützung gegen die Wellendichtung eingerichtet ist. Der Labyrinthspalt erstreckt sich besonders bevorzugt von radial außerhalb des Fußkreisdurchmessers des Drehkolbens von der Stirnseite des Drehkolbens in Richtung der Wellendichtung, wobei der Labyrinthspalt sich radial in Richtung der Welle erstreckt. Über diesen Dichtweg (Pfad durch den Labyrinthspalt) wird eine Verringerung des Strömungsverschleißes an den Dichtungsbauteilen und am Drehkolben insbesondere im Bereich des Fußkreises erreicht, da im Vergleich zu dem Weg, den das Fluid ohne den Labyrinthspalt über die Kurzschlussströmung von der Druckseite zur Saugseite nehmen könnte, der Dichtweg verlängert wird.

Ein weiterer Vorteil, der sich durch die erfindungsgemäße Ausbildung des Dichtweges ergibt, ist darin zu sehen, dass über das erfindungsgemäß im Wesentlichen radiale Dichtlabyrinth ein Druckabfall erzeugt wird von dem kolbenseitigen Beginn des Labyrinthspalts bis zum wellendichtungsseitigen Ende des Labyrinthspalts. Der an der Wellendichtung anstehende Druck wird somit im Vergleich zu herkömmlichen Anordnungen vermindert, was die Lebensdauer der Wellendichtung erhöht. Dieses Funktionsprinzip ist auf die meisten Wellendichtungen anwendbar, insbesondere auch auf Cartridge-Dichtungen.

Gemäß einer weiteren bevorzugten Ausführungsform ist das zweite Dichtungsglied als äußere Schutzplatte ausgebildet und an einer Wand des Pumpenraums der Drehkolbenpumpe befestigbar.

Weiter vorzugsweise weist das zweite Dichtungsglied eine Ausnehmung auf, deren Kontur mit dem ersten Dichtungsglied derart korrespondiert, dass das erste Dichtungsglied teilweise oder vollständig innerhalb der Ausnehmung anordenbar ist. Es wird ein Labyrinthspalt geschaffen, indem das erste Dichtungsglied sich teilweise oder vollständig innerhalb des zweiten Dichtungsglieds bzw. dessen Ausnehmung erstreckt und ein Labyrinthspalt bereitgestellt wird, dessen Form eine Funktion der Formgebung und Kontur des ersten Dichtungsglieds und des zweiten Dichtungsglieds ist.

Weiter vorzugsweise weist die Vorrichtung gemäß der vorliegenden Erfindung ein viertes Dichtungsglied auf, welches als innere Schutzplatte ausgebildet ist und derart benachbart zu dem ersten Dichtungsglied an einer Wand des Pumpraums der Drehkolbenpumpe befestigbar ist, dass sich zwischen dem ersten Dichtungsglied und dem vierten Dichtungsglied ein radialer Spaltabschnitt erstreckt.

Weiter vorzugsweise weist das vierte Dichtungsglied einen äußeren Durchmesser auf, welcher größer ist als der äußere Durchmesser der Ausnehmung des zweiten Dichtungsglieds. Besonders bevorzugt ist es, das vierte Dichtungsglied überdeckend mit dem zweiten Dichtungsglied in Anlage zu bringen. Auf diese Weise wird einerseits der Labyrinthspalt nach außen verschlossen, und weiterhin lässt sich das vierte Dichtungsglied beispielsweise mittels Klemmen mittels des zweiten Dichtungsglieds an dem Gehäuse der Drehkolbenpumpe befestigen.

In einer weiteren bevorzugten Ausführungsform der Erfindung ist bzw. sind das erste Dichtungsglied und/oder das zweite Dichtungsglied und/oder das dritte Dichtungsglied und/oder das vierte Dichtungsglied rotationssymmetrisch ausgebildet und koaxial in Bezug zueinander und in Bezug zu der Welle anordenbar. Einbau, Ausbau und Fertigung der Dichtungsglieder werden hierdurch mit hoher Präzision zu vertretbaren Fertigungskosten ermöglicht.

Die Erfindung löst die Aufgabe bei einer Drehkolbenpumpe der eingangs genannten Art, indem die Drehkolbenpumpe eine Vorrichtung zum Abdichten des Pumpraums gemäß einer der vorstehend beschriebenen bevorzugten Ausführungsformen aufweist.

Durch die Vorrichtung ist der Pumpraum gegenüber dem fluidfreien Bereich abgedichtet. Die Drehkolbenpumpe wird bevorzugt dadurch weitergebildet, dass sich der Labyrinthspalt von der Stirnseite des Drehkolbens im Bereich des Fußkreisdurchmessers des Drehkolbens aus bis zu einer Wellendichtung im Bereich des Wellendurchmessers hin erstreckt.

Gemäß einer weiteren bevorzugten Ausführungsform der Drehkolbenpumpe ist die Wellendichtung als Cartridge-Dichtung ausgebildet.

Hinsichtlich weiterer Vorteile der erfindungsgemäßen Drehkolbenpumpe wird auf die vorstehenden Ausführungen zur Dicht-Vorrichtung verwiesen.

Die Erfindung wird im Folgenden anhand bevorzugter Ausführungsformen und unter Bezugnahme auf die angefügten Zeichnungen näher beschrieben. Hierbei zeigt:
- Figur 1: eine schematische Seitenansicht durch eine Drehkolbenpumpe gemäß der vorliegenden Erfindung;
- Figur 2: eine erste Querschnittsansicht der Drehkolbenpumpe aus Figur 1 entlang der Linien A-A;
- Figur 3: einen vergrößerten Ausschnitt der Darstellung aus Figur 2;
- Figur 4: eine Detailansicht der erfindungsgemäßen Vorrichtung gemäß einer zweiten bevorzugten Ausführungsform; und
- Figur 5: eine Detailansicht der erfindungsgemäßen Vorrichtung gemäß einer dritten bevorzugten Ausführungsform.

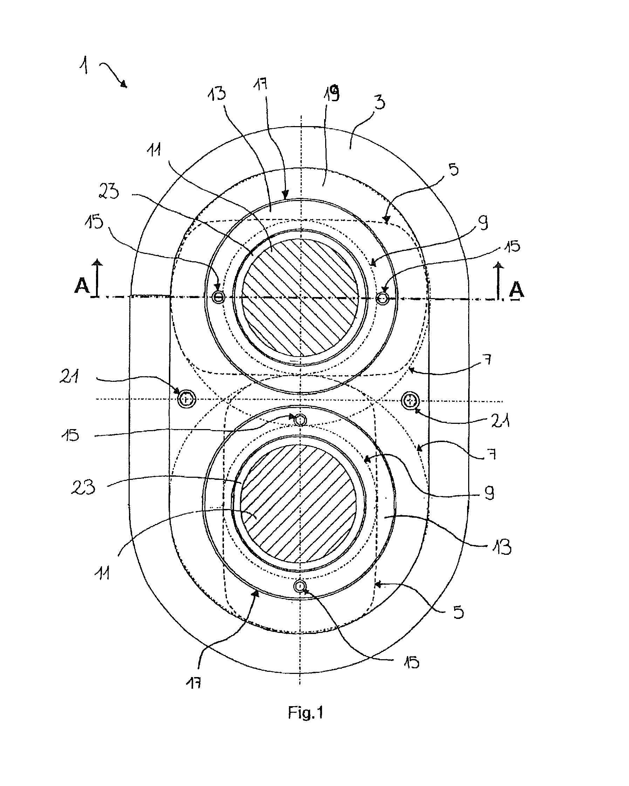

Figur 1 gibt zunächst den grundsätzlichen Aufbau einer Drehkolbenpumpe wieder. Gezeigt ist eine Drehkolbenpumpe 1 mit einem Gehäuse 3. Innerhalb des Gehäuses 3 ist ein Pumpraum vorgesehen, innerhalb dessen zwei ineinander verzahnte Drehkolben 5 angeordnet sind. Ein Drehkolben 5 weist jeweils einen Fußkreisdurchmesser 9 und einen Kopfkreisdurchmesser 7 auf. Ein Abschnitt am Kopfkreis eines der Drehkolben 5 wälzt jeweils an einem Abschnitt des Fußkreises des anderen Drehkolbens 5 in allgemein bekannter Weise ab. Dabei bilden die Drehkolben 5 zwischen einer Wandung des Pumpraums und dem Drehkolben 5 jeweils eine Kavität aus, innerhalb derer Fluid umgefördert wird. Die Drehkolben 5 sind jeweils auf eine Welle 11 aufgenommen. An einer Stirnseite der Drehkolben 5 ist jeweils eine Mehrzahl Dichtungsglieder vorgesehen. Gemäß Figur 1 sind dies jeweils ein erstes Dichtungsglied 13, welches als mitdrehender Schutzplattenring ausgebildet ist und mittels kraftschlüssiger Verbindungsmittel, vorliegend Befestigungsschrauben 15, an jeweils einem Drehkolben 5 befestigt. Das erste Dichtungsglied 13 ist jeweils in einer Ausnehmung 17 aufgenommen. Die Ausnehmung 17 ist in einem zweiten Dichtungsglied 19 vorgesehen. In der Ausführung gemäß Figur 1 sind in einem einzigen zweiten Dichtungsglied 19 zwei Ausnehmungen 17 zur Aufnahme jeweils eines ersten Dichtungsgliedes 13 für den jeweiligen Drehkolben 5 vorgesehen. Alternativ können auch zwei getrennte zweite Dichtungsglieder 19 in dem Gehäuse 3 der Drehkolbenpumpe 1 vorgesehen sein. Die Montage lediglich eines zweiten Dichtungsgliedes 19, welches gleichzeitig beide ersten Dichtungsglieder 13 aufnimmt, hat sich jedoch als vorteilhaft herausgestellt. Das zweite Dichtungsglied 19 ist in diesem Ausführungsbeispiel als äußere Schutzplatte ausgebildet und mittels kraftschlüssiger Verbindungsmittel 21, vorliegend ebenfalls Verbindungsschrauben, reversibel lösbar mit dem Gehäuse 3 verbunden.

Auf der jeweiligen Welle 11 ist weiterhin jeweils ein drittes Dichtungsglied 23 angeordnet. Gemäß dem vorliegenden Ausführungsbeispiel ist das dritte Dichtungsglied 23 als Distanzring ausgebildet.

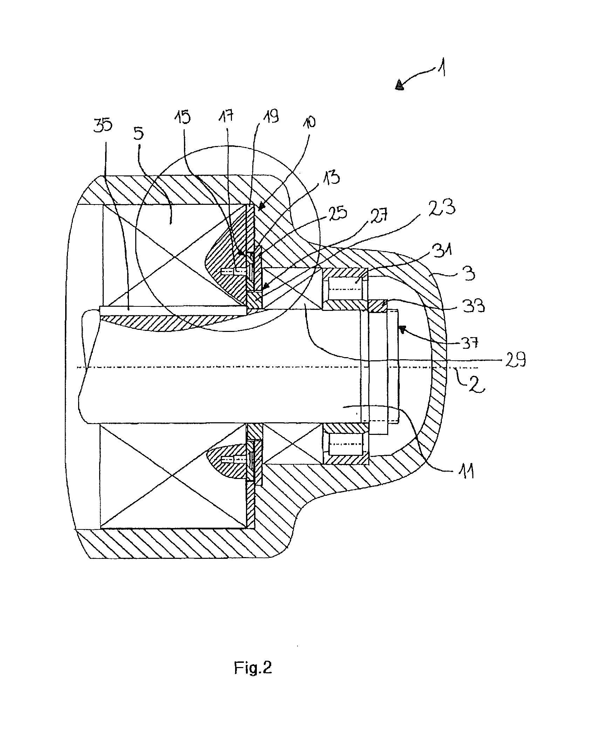

Figur 2 zeigt eine Querschnittsansicht entlang der Linie A-A aus Figur 1. Die in Figur 1 und 2 gezeigte Drehkolbenpumpe 1 weist eine erfindungsgemäße Vorrichtung 10 zum Abdichten des Pumpraums der Drehkolbenpumpe 1 gegen das Austreten von Fluid aus dem Pumpraum. Innerhalb des Gehäuses 3 ist an einer Stirnseite des Drehkolbens 5 das erste Dichtungsglied 13 mittels der Befestigungsmittel 15 an dem Drehkolben 5 befestigt. Das erste Dichtungsglied 13 gemäß Figuren 1 und 2 ist als Ringscheibe ausgebildet, deren Dicke in axialer Richtung als bezogen auf die Drehachse 2 der Welle zu verstehen und im Wesentlichen gleich der Dicke des zweiten Dichtungsglieds 19 ist. Das zweite Dichtungsglied 19 ist ortsfest mit dem Gehäuse 3 verbunden. Die Ausnehmung 17, innerhalb welcher das erste Dichtungsglied 13 aufgenommen ist, weist einen Durchmesser auf, welcher geringfügig größer ist als der äußere Durchmesser des ersten Dichtungsglieds 13, so dass zwischen dem ersten Dichtungsglied 13 und dem zweiten Dichtungsglied 19 in montierter Anordnung ein sich im vorliegenden Ausführungsbeispiel axial erstreckender Spalt bzw. Ringspalt ausgebildet ist.

Zusätzlich zu dem ersten Dichtungsglied 13 und dem zweiten Dichtungsglied 19 sowie dem dritten Dichtungsglied 23 ist ein viertes Dichtungsglied 25 vorgesehen. Das vierte Dichtungsglied 25 ist als innere Schutzplatte ausgebildet und feststehend mit dem Gehäuse 3 und dem zweiten Dichtungsglied 19 verbunden. In alternativen Ausführungsformen ist das vierte Dichtungsglied entweder analog zu dem zweiten Dichtungsglied 19 als ein Körper mit zwei Ausnehmungen 27 ausgebildet oder als rotationsymmetrischer Körper, beispielsweise in Form einer Ringscheibe mit nur jeweils einer Ausnehmung 27. Die Ausnehmung 27 ist zur Aufnahme des dritten Dichtungsglieds 23 eingerichtet. Der Durchmesser der Ausnehmung 27 ist geringfügig größer als der äußere Durchmesser des dritten Dichtungsglieds 23, sodass in montierter Anordnung zwischen dem vierten Dichtungsglied 25 und dem dritten Dichtungsglied 23 ein sich in axialer Richtung erstreckender Ringspalt erstreckt.

Das vierte Dichtungsglied 25 weist einen äußeren Durchmesser auf, der in der gezeigten Ausführung den Durchmesser der Ausnehmung 17 des zweiten Dichtungsglieds 19 übersteigt, sodass das vierte Dichtungsglied 25 und das zweite Dichtungsglied überlappend angeordnet und an dem Gehäuse 3 befestigt sind. Hierdurch ist es möglich, einen Abstand zwischen dem ersten Dichtungsglied 13 und dem vierten Dichtungsglied 25 in axialer Richtung einzustellen. Aus diesem Abstand resultiert ein sich in radialer Richtung erstreckender umlaufender Spalt, der radial außen in den axialen Spalt zwischen dem ersten Dichtungsglied 13 und zweiten Dichtungsglied 19 übergeht und radial innen in den axialen Spalt zwischen dem vierten Dichtungsglied 25 und dem dritten Dichtungsglied 23 übergeht. Hinsichtlich des Spaltverlaufs wird auch auf die nachstehenden Figuren verwiesen.

Das dritte Dichtungsglied 23 ist gegen eine Wellendichtung 29 abgestützt, die zwischen dem Gehäuse 3 und der Welle 11 angeordnet ist. Weiterhin ist auf der Welle 11 ein Lager 31 vorgesehen, welches entweder unmittelbar in das Gehäuse 3 mit seinem Außenring eingesetzt ist, oder alternativ über eine Topflagerung (nicht dargestellt). Das Lager 31, die Wellendichtung 29, und das dritte Dichtungsglied 23 sind gemäß Figur 2 mittels einer Wellenmutter 33 wegen den Sitz einer Passfeder 35 fixiert. Alternativ ist ein Fixieren relativ zu einem Wellenabsatz oder dergleichen vorzusehen. Die Wellenmutter 33 ist an einem Wellenende 37 der Welle 11 angeordnet.

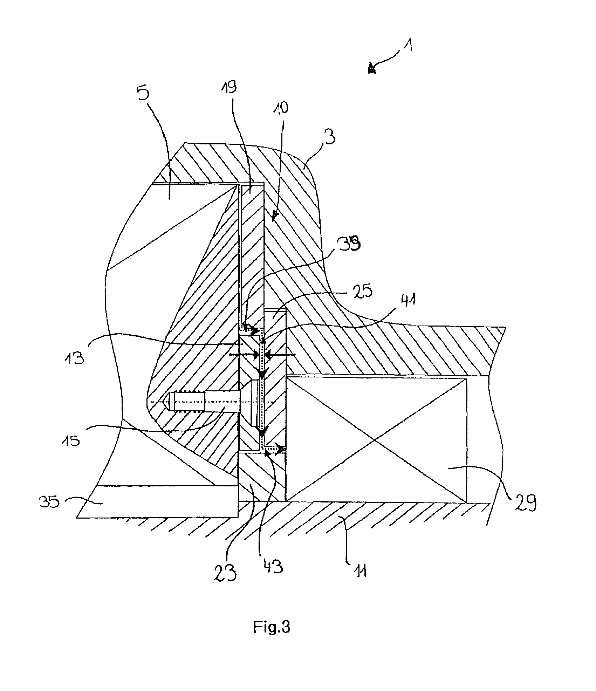

In Figur 3 ist in einer vergrößerten Darstellung der Verlauf des erfindungsgemäßen Labyrinthspalts dargestellt. Der Labyrinthspalt erstreckt sich zwischen dem ersten Dichtungsglied 13 und dem zweiten Dichtungsglied 19, zwischen dem ersten Dichtungsglied 13 und dem dritten Dichtungsglied 23 sowie zwischen dem ersten Dichtungsglied 14 und dem vierten Dichtungsglied 25 in verschiedenen Abschnitten. Zwischen dem ersten Dichtungsglied 13 und dem zweiten Dichtungsglied 19 ist ein erster Spaltabschnitt 39 ausgebildet. Dieser Spaltabschnitt 39, welcher einen im Wesentlichen axialen Verlauf beschreibt, geht über in einen im Wesentlichen radialen Spaltabschnitt 41 zwischen dem ersten Dichtungsglied und dem vierten Dichtungsglied 25. Der Dichtweg vom Eintreten in den Spaltabschnitt 41 bis zum Austreten aus dem Spaltabschnitt 41 in radialer Richtung, ist größer als der Dichtweg, den das Fluid beim Durchstreifen des axialen Spaltabschnitts 39 sowie eines Spaltabschnitts 43 in axialer Richtung zwischen dem dritten Dichtungsglied 23 und dem vierten Dichtungsglied 41 durchschreiten muss. Der Verlauf des radialen Spaltabschnitts 43 beginnt - bezogen auf die Welle 11 - radial außen im Bereich des Fußkreisdurchmessers, besonders bevorzugt radial außerhalb davon und endet in radialer Richtung näher in Richtung der Welle 11 auf Seiten der Wellendichtung 19.

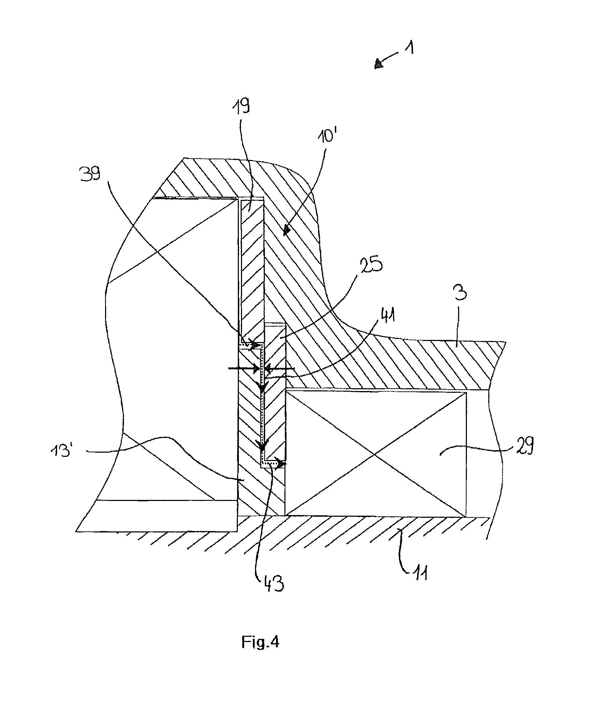

In Figur 4 ist eine alternative Ausführungsform der erfindungsgemäßen Vorrichtung 10 aus den Figuren 1 bis 3 im Zusammenbau mit einer erfindungsgemäßen Drehkolbenpumpe 1 gezeigt. Die in Figur 4 dargestellte Vorrichtung 10^{I} weist ein zweites Dichtungsglied 19 und ein viertes Dichtungsglied 25 nach Vorbild der Ausführungsform aus den Figuren 1 bis 3 auf. Im Unterschied zu der Ausführungsform gemäß Figuren 1 bis 3 sind das erste Dichtungsglied und das dritte Dichtungsglied als ein einziges erstes Dichtungsglied 13^{I} ausgeführt. An der den Labyrinthspalt begrenzenden Seite des ersten Dichtungsglieds 13^{I} ist - bezogen auf die Welle 11 - radial innen ein Vorsprung in Richtung der Wellendichtung 29 ausgebildet. Folglich sind sowohl der radiale Spaltabschnitt 41, als auch der innere axiale Spaltabschnitt 43 zwischen dem ersten Dichtungsglied 13^{I} und dem vierten Dichtungsglied 25 ausgebildet. Strenggenommen könnte das vierte Dichtungsglied 25 gemäß diesem Ausführungsbeispiel auch als drittes Dichtungsglied bezeichnet werden, nachdem die Vorrichtung 10^{I} lediglich drei Dichtungsglieder aufweist. Aus Gründen der Übersichtlichkeit bleibt es jedoch bei dieser Benennung.

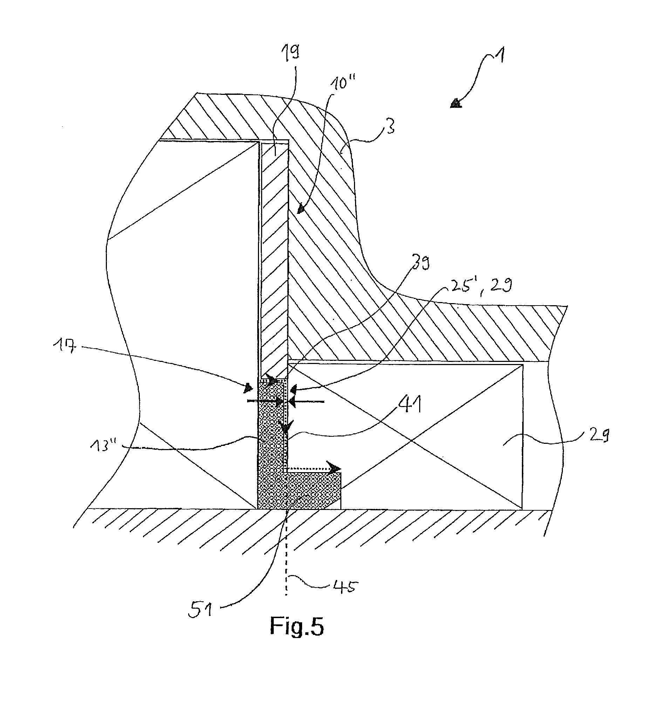

Figur 5 zeigt eine dritte Ausführungsform der erfindungsgemäßen Vorrichtung 10^{II}, eingebaut in ein Gehäuse 3 der erfindungsgemäßen Drehkolbenpumpe 1. Die Vorrichtung 10^{II} weist wie die Ausführungsformen der vorherigen Figuren ein zweites Dichtungsglied 19 auf. Ein erstes Dichtungsglied 13^{II} ist innerhalb der Ausnehmung 17 des zweiten Dichtungsglieds 19 aufgenommen, wodurch ein sich im Wesentlichen axial erstreckender Spaltabschnitt 39 des Labyrinthspalts zwischen dem zweiten Dichtungsglied 19 und dem ersten Dichtungsglied 13^{II} erstreckt. Der sich im Wesentlichen radial erstreckende Spaltabschnitt 41 des Labyrinthspalts ist zwischen dem ersten Dichtungsglied 13^{II} und der Wandung 45 der Wellendichtung 29 gebildet. Optional ist die Wellendichtung 29 somit als "viertes" Dichtungsglied 25^{I} ausgebildet.

Das erste Dichtungsglied 13^{II} ist gemäß diesem Ausführungsbeispiel mit einem Vorsprung 51 ausgebildet, welcher sich in das Innere der Wellendichtung 29 hinein erstreckt. Vorzugsweise ist das erste Dichtungsglied 13^{II} als Bestandteil einer Cartridge Dichtung oder dgl. ausgebildet. Das erste Dichtungsglied 13^{II} ist gemäß dieser Ausführungsform teilweise in die Wellendichtung 29 integriert und optional zusammen mit der Wellendichtung 29 austauschbar. In analoger Betrachtungsweise ist die Wellendichtung 29 optional in die Vorrichtung 10^{II} integriert. In diesem Wege ist die Vorrichtung 10^{II} bei Drehkolbenpumpen 1 aller Baugrößen durch Austausch der dort bislang verbauten Wellendichtungen und Ersatz mit der gemäß Figur 5 gezeigten Lösung nachrüstbar. Der Dichtweg, den der Labyrinthspalt gemäß dieser Ausführungsform bildet, besteht aus einem axialen Abschnitt - dem Spaltabschnitt 39 - und einem radialen Abschnitt - dem Spaltabschnitt 41.

## Patentansprüche

1. Vorrichtung (10, 10^{I}, 10") zum Abdichten, insbesondere im Bereich einer Wellendurchführung, eines Pumpraums einer Drehkolbenpumpe (1) gegenüber einem fluidfreien Bereich der Drehkolbenpumpe (1), mit
zwei oder mehr Dichtungsgliedern (13, 13^{I}, 13", 19, 23, 25), die derart benachbart an einer Stirnseite eines auf der Welle (11) angeordneten Drehkolbens (5) in dem Pumpraum der Drehkolbenpumpe (1) anordenbar sind, dass sich zwischen den Dichtungsgliedern (13, 13^{I}, 13", 19, 23, 25) ein Labyrinthspalt erstreckt, welcher zur Dichtwegverlängerung relativ zu der Welle (11) in radialer Richtung und in axialer Richtung eingerichtet ist, wobei der Dichtweg der Pfad durch den Labyrinthspalt ist und der Dichtweg in radialer Richtung relativ zu der Welle (11) größer ist als der Dichtweg in axialer Richtung relativ zu der Welle (11)
**dadurch gekennzeichnet, dass** das erste Dichtungsglied (13, 13^{I}, 13") als Ringscheibe ausgebildet ist und einen äußeren Durchmesser aufweist, welcher sich über den Fußkreis (9) des Drehkolbens (5) hinaus erstreckt, wobei der äußere Durchmesser des ersten Dichtungsglieds den Beginn des Labyrinthspalts kolbenseitig begrenzt.

2. Vorrichtung (10, 10^{I}, 10") nach Anspruch 1,
**dadurch gekennzeichnet, dass** der Labyrinthspalt einen oder mehrere sich relativ zu der Welle axial erstreckende Spaltabschnitte (39, 43) und einen oder mehrere sich relativ zu der Welle radial erstreckenden Spaltabschnitte (41) aufweist.

3. Vorrichtung (10, 10^{I}, 10") nach Anspruch 1 oder 2,
**dadurch gekennzeichnet, dass** mindestens ein erstes Dichtungsglied (13, 13^{I}, 13") mittels formschlüssiger oder kraftschlüssiger Verbindungsmittel (15) an einer Stirnseite des Drehkolbens (5) befestigbar ist und mindestens ein zweites Dichtungsglied (19,) mittels formschlüssiger oder kraftschlüssiger Verbindungsmittel (21) an dem Gehäuse der Drehkolbenpumpe (1) befestigbar ist.

4. Vorrichtung (10, 10^{I}, 10^{II}) nach einem der vorstehenden Ansprüche,
**dadurch gekennzeichnet, dass** das erste Dichtungsglied (13^{I}, 13^{II}) an einer Stirnseite einen Vorsprung in axialer Richtung relativ zu der Welle (11) aufweist, welcher zur Abstützung gegen eine Wellendichtung (29) eingerichtet ist.

5. Vorrichtung (10, 10^{I}, 10^{II}) nach einem der Ansprüche 1 bis 3,
**gekennzeichnet durch** ein drittes Dichtungsglied (23), welches als Distanzring ausgebildet ist und zur Abstützung gegen eine Wellendichtung (29) eingerichtet ist.

6. Vorrichtung (10, 10^{I}, 10^{II}) nach einem der vorstehenden Ansprüche,
**dadurch gekennzeichnet, dass** das zweite Dichtungsglied (19) als äußere Schutzplatte ausgebildet ist und an einer Wand des Pumpraums der Drehkolbenpumpe (1) befestigbar ist.

7. Vorrichtung (10, 10^{I}, 10^{II}) nach Anspruch 6,
**dadurch gekennzeichnet, dass** das zweite Dichtungsglied (19) eine Ausnehmung (17) aufweist, deren Kontur mit dem ersten Dichtungsglied derart korrespondiert, dass das erste Dichtungsglied (13, 13^{I}, 13^{II}) teilweise oder vollständig innerhalb der Ausnehmung (17) anordenbar ist.

8. Vorrichtung (10, 10^{I}, 10^{II}) nach Anspruch 5,
**gekennzeichnet durch** ein viertes Dichtungsglied (25), welches als innere Schutzplatte ausgebildet ist und derart benachbart zu dem ersten Dichtungsglied (13, 13^{I}, 13^{II}) an einer Wand des Pumpraums der Drehkolbenpumpe (1) befestigbar ist, dass sich zwischen dem ersten Dichtungsglied (13, 13^{I}, 13^{II}) und dem vierten Dichtungsglied (25) ein radialer Spaltabschnitt erstreckt.

9. Vorrichtung (10, 10^{I}, 10^{II}) nach Anspruch 8,
**dadurch gekennzeichnet, dass** das vierte Dichtungsglied (25) einen äußeren Durchmesser aufweist, welcher größer ist als der äußere Durchmesser der Ausnehmung (17) des zweiten Dichtungsglieds (19), und die Ausnehmung (17) überdeckend mit dem zweiten Dichtungsglied (19) in Anlage bringbar ist.

10. Drehkolbenpumpe (1) zur Förderung von Fluiden, insbesondere von mit Festkörpern beladenen Flüssigkeiten, mit
einem Gehäuse (3) mit einem Pumpraum und mindestens einem Paar ineinander verzahnter, innerhalb des Pumpraumes angeordneter Drehkolben (5), welche jeweils auf einer Welle (11) gelagert sind, wobei sich die Welle (11) aus dem Pumpraum heraus in einen fluidfreien Bereich der Drehkolbenpumpe (1) erstreckt,
**dadurch gekennzeichnet, dass** die Drehkolbenpumpe (1) eine Vorrichtung (10, 10^{I}, 10^{II}) zum Abdichten des Pumpraums nach einem der Ansprüche 1 bis 9 aufweist.

11. Drehkolbenpumpe (1) nach Anspruch 10,
**dadurch gekennzeichnet, dass** sich der Labyrinthspalt von der Stirnseite des Drehkolbens (5) aus bis zu einer Wellendichtung im Bereich des Wellendurchmessers hin erstreckt.

12. Drehkolbenpumpe (1) nach Anspruch 11,
**dadurch gekennzeichnet, dass** die Wellendichtung als Cartridge-Dichtung ausgebildet ist.

## Claims

1. Device (10, 10', 10") for sealing, in particular in the region of a shaft feedthrough, a pump chamber of a rotary piston pump (1) with respect to a fluid-free region of the rotary piston pump (1), comprising
two or more sealing members (13, 13', 13", 19, 23, 25) which can be arranged, adjacent an end face of a rotary piston (5) arranged on the shaft (11), in the pump chamber of the rotary piston pump (1) such that a labyrinth gap extends between the sealing members (13, 13', 13", 19, 23, 25) and is configured to extend the sealing path relative to the shaft (11) in the radial direction and in the axial direction, wherein the sealing path is the path through the labyrinth gap and the sealing path in the radial direction relative to the shaft (11) is greater than the sealing path in the axial direction relative to the shaft (11),
**characterised in that** the first sealing member (13, 13', 13 ") is formed as a ring washer and comprises an outer diameter which extends beyond the root circle (9) of the rotary piston (5), wherein the outer diameter of the first sealing member delimits the start of the labyrinth gap on the piston side.

2. Device (10, 10', 10") as claimed in claim 1,
**characterised in that** the labyrinth gap has one or more gap sections (39, 43) extending axially relative to the shaft and one or more gap sections (41) extending radially relative to the shaft.

3. Device (10, 10', 10") as claimed in claim 1 or 2,
**characterised in that** at least one first sealing member (13, 13', 13") can be attached to an end face of the rotary piston (5) by means of form-fitting or force-fitting connecting means (15), and at least one second sealing member (19) can be attached to the housing of the rotary piston pump (1) by means of form-fitting or force-fitting connecting means (21).

4. Device (10, 10', 10") as claimed in any one of the preceding claims,
**characterised in that** the first sealing member (13', 13") comprises a protrusion on an end face in the axial direction relative to the shaft (11), which protrusion is configured to provide support with respect to a shaft seal (29).

5. Device (10, 10', 10") as claimed in any one of claims 1 to 3,
**characterised by** a third sealing member (23) which is formed as a spacer ring and is configured to provide support with respect to a shaft seal (29).

6. Device (10, 10', 10") as claimed in any one of the preceding claims,
**characterised in that** the second sealing member (19) is formed as an outer protective plate and can be attached to a wall of the pump chamber of the rotary piston pump (1).

7. Device (10, 10', 10") as claimed in claim 6,
**characterised in that** the second sealing member (19) comprises a recess (17), the contour of which corresponds to the first sealing member such that the first sealing member (13, 13', 13") can be arranged partially or completely within the recess (17).

8. Device (10, 10', 10'') as claimed in claim 5,
**characterised by** a fourth sealing member (25) which is formed as an inner protective plate and can be attached to a wall of the pump chamber of the rotary piston pump (1) adjacent to the first sealing member (13, 13', 13") such that a radial gap suction extends between the first sealing member (13, 13', 13") and the fourth sealing member (25).

9. Device (10, 10', 10") as claimed in claim 8,
**characterised in that** the fourth sealing member (25) has an outer diameter which is larger than the outer diameter of the recess (17) in the second sealing member (19), and the recess (17) can be moved against, and cover, the second sealing member (19).

10. Rotary piston pump (1) for conveying fluids, in particular liquids containing solids, comprising
a housing (3) with a pump chamber and at least one pair of interlocking rotary pistons (5) arranged within the pump chamber and each mounted on a shaft (11),
wherein the shaft (11) extends out of the pump chamber into a fluid-free region of the rotary piston pump (1),
**characterised in that** the rotary piston pump (1) comprises a device (10, 10', 10") for sealing the pump chamber as claimed in any one of claims 1 to 9.

11. Rotary piston pump (1) as claimed in claim 10,
**characterised in that** the labyrinth gap extends from the end face of the rotary piston (5) to a shaft seal in the region of the shaft diameter.

12. Rotary piston pump (1) as claimed in claim 11,
**characterised in that** the shaft seal is formed as a cartridge seal.

## Revendications

1. Dispositif (10, 10', 10") servant à rendre étanche, en particulier dans la zone d'un passage d'arbre, une chambre de pompage d'une pompe à piston rotatif (1) par rapport à une zone sans fluide de la pompe à piston rotatif (1), comprenant
deux organes d'étanchéité (13, 13', 13", 19, 23, 25) ou plus, qui peuvent être disposés dans la chambre de pompage de la pompe à piston rotatif (1) de manière adjacente à un côté frontal d'un piston rotatif (5) disposé sur l'arbre (11) de telle manière qu'un interstice formant labyrinthe s'étend entre les organes d'étanchéité (13, 13', 13", 19, 23, 25), lequel est mis en place afin d'allonger le trajet étanche par rapport à l'arbre (11) dans la direction radiale et dans la direction axiale, sachant que le trajet étanche correspond au chemin à travers l'interstice formant labyrinthe et que le trajet étanche est plus grand dans la direction radiale par rapport à l'arbre (11) que le trajet étanche dans la direction axiale par rapport à l'arbre (11),
**caractérisé en ce que** le premier organe d'étanchéité (13, 13', 13 ") est réalisé sous la forme d'un disque annulaire et présente un diamètre extérieur, qui s'étend au-delà du cercle de pied (9) du piston rotatif (5), sachant que le diamètre extérieur du premier organe d'étanchéité délimite, côté piston, le début de l'interstice formant labyrinthe.

2. Dispositif (10, 10', 10") selon la revendication 1,
**caractérisé en ce que** l'interstice formant labyrinthe présente une ou plusieurs sections d'interstice (39, 43) s'étendant de manière axiale par rapport à l'arbre et une ou plusieurs sections d'interstice (41) s'étendant de manière radiale par rapport à l'arbre.

3. Dispositif (10, 10', 10") selon la revendication 1 ou 2,
**caractérisé en ce qu'**au moins un premier organe d'étanchéité (13, 13', 13") peut être fixé au moyen de moyens de liaison (15) à complémentarité de forme ou à force au niveau d'un côté frontal du piston rotatif (5) et au moins un deuxième organe d'étanchéité (19) peut être fixé au moyen de moyens de liaison (21) à complémentarité de forme ou à force au niveau du boîtier de la pompe à piston rotatif (1).

4. Dispositif (10, 10', 10") selon l'une quelconque des revendications précédentes,
**caractérisé en ce que** le premier organe d'étanchéité (13', 13") présente au niveau d'un côté frontal une partie faisant saillie dans la direction axiale par rapport l'arbre (11), laquelle est mise en place aux fins du soutien par rapport à un joint d'étanchéité d'arbre (29).

5. Dispositif (10, 10', 10") selon l'une quelconque des revendications 1 à 3,
**caractérisé par** un troisième organe d'étanchéité (23), qui est réalisé sous la forme d'une bague d'écartement et qui est mis en place aux fins du soutien contre une joint d'étanchéité d'arbre (29).

6. Dispositif (10, 10', 10") selon l'une quelconque des revendications précédentes,
**caractérisé en ce que** le deuxième organe d'étanchéité (19) est réalisé sous la forme d'une plaque de protection extérieure et peut être fixé au niveau d'une paroi de la chambre de pompage de la pompe à piston rotatif (1).

7. Dispositif (10, 10', 10") selon la revendication 6,
**caractérisé en ce que** le deuxième organe d'étanchéité (19) présente un évidemment (17), dont le contour correspond au premier organe d'étanchéité de telle manière que le premier organe d'étanchéité (13, 13',13") peut être disposé en partie ou en totalité à l'intérieur de l'évidement (17).

8. Dispositif (10,10', 10") selon la revendication 5,
**caractérisé par** un quatrième organe d'étanchéité (25), qui est réalisé sous la forme d'une plaque de protection intérieure et qui peut être fixé au niveau d'une paroi de la chambre de pompage de la pompe à piston rotatif (1) de manière adjacente par rapport au premier organe d'étanchéité (13,13', 13") de telle manière qu'une section d'interstice, radiale s'étend entre le premier organe d'étanchéité (13, 13', 13") et le quatrième organe d'étanchéité (25).

9. Dispositif (10, 10', 10") selon la revendication 8,
**caractérisé en ce que** le quatrième organe d'étanchéité (25) présente un diamètre extérieur, qui est plus grand que le diamètre extérieur de l'évidement (17) du deuxième organe d'étanchéité (19), et l'évidement (17) peut être amené en appui de manière à coïncider avec le deuxième organe d'étanchéité (19).

10. Pompe à piston rotatif (1) servant à refouler des fluides, en particulier des liquides chargés avec des corps solides, comprenant
un carter (3) pourvu d'une chambre de pompage et d'au moins une paire de pistons rotatifs (5) imbriqués l'un dans l'autre, disposés à l'intérieur de la chambre de pompage, lesquels sont agencés respectivement sur un arbre (11), sachant que l'arbre (11) s'étend en dehors de la chambre de pompage dans la zone sans fluide de la pompe à pistons rotatifs (1),
**caractérisée en ce que** la pompe à piston rotatif (1) présente un dispositif (10, 10', 10") servant à rendre étanche la chambre de pompage selon l'une quelconque des revendications 1 à 9.

11. Pompe à piston rotatif (1) selon la revendication 10,
**caractérisée en ce que** l'interstice formant labyrinthe s'étend depuis le côté frontal du piston rotatif (5) jusqu'à un joint d'étanchéité d'arbre dans la zone du diamètre d'arbre.

12. Pompe à piston rotatif (1) selon la revendication 11,
**caractérisé en ce que** le joint d'étanchéité d'arbre est réalisé sous la forme d'un joint d'étanchéité sous forme de cartouche.
